(19) **Europäisches Patentamt**
**European Patent Office**
**Office européen des brevets**

(11) **EP 4 557 677 A1**

(12) **EUROPEAN PATENT APPLICATION**
published in accordance with Art. 153(4) EPC

(43) Date of publication:
**21.05.2025 Bulletin 2025/21**

(21) Application number: **23854215.3**

(22) Date of filing: **28.07.2023**

(51) International Patent Classification (IPC):
***H04L 25/02*** (2006.01)   ***H04L 27/26*** (2006.01)

(52) Cooperative Patent Classification (CPC):
**H04L 25/02; H04L 27/26**

(86) International application number:
**PCT/CN2023/109879**

(87) International publication number:
**WO 2024/037311 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.08.2022 CN 202210982215**

(71) Applicant: ZTE Corporation
**Shenzhen, Guangdong 518057 (CN)**

(72) Inventors:
* XU, Xiaojing
  **Shenzhen, Guangdong 518057 (CN)**
* LIN, Wei
  **Shenzhen, Guangdong 518057 (CN)**
* LI, Ruimei
  **Shenzhen, Guangdong 518057 (CN)**
* RUI, Hua
  **Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **COMMUNICATION METHOD, ENVIRONMENT SENSING METHOD, APPARATUS, DEVICE, MEDIUM, AND PRODUCT**

(57)    Provided in the embodiments of the present application are a communication method, a communication environment sensing method, a communication apparatus, a network device, a computer readable storage medium, and a computer program product. By means of analyzing wireless communication signals, communication environment sensing information is obtained, thereby relatively well sensing a wireless communication environment.

S100 Receive an OFDM signal

S200 Perform channel estimation according to a received pilot signal in OFDM to obtain a channel characteristic

S300 Obtain first environment information according to the channel characteristic

S400 Obtain interference characteristic data according to the OFDM signal, and obtain second environment information according to the interference characteristic data

S500 Obtain communication environment sensing information according to the first environment information and the second environment information

S600 Match a receiver according to the communication environment sensing information

S700 Perform signal detection according to the received pilot signal, a received data signal, and a preset local pilot signal to obtain a transmitted signal

S800 Perform demodulation according to the transmitted signal to obtain demodulated data

FIG. 5

EP 4 557 677 A1

**Description**

**CROSS-REFERENCE TO RELATED APPLICATION**

This application is based on and claims the priority of Chinese patent application No. 202210982215.2 filed on August 16, 2022, the disclosure of which is incorporated herein by reference in its entirety.

**TECHNICAL FIELD**

Embodiments of the present disclosure relate to the field of communications technologies, in particular to a communication method, a communication environment sensing method, a communication apparatus, a network device, a medium, and a product.

**BACKGROUND**

Integrated sensing and communication (communication capability and sensing capability) (referred to as ISAC for short) is an important technology for future communication networks such as a 6th generation (6G) network. Communication is the transmission of information, and sensing is the detection and information acquisition of an environment such as a communication environment. Compared with a technology with communication and sensing separated, the ISAC technology has the features of high spectral efficiency and less interference between communication and sensing. Therefore, some technologies expect to sense the communication environment and select a receiver matching the communication environment according to a sensing result.

In an existing technology, receivers at a communication physical layer usually adopt a unified receiver processing framework and unified configuration parameters, which makes it difficult for a particular receiver to match well with a sensed environment. How to match receivers with different communication environments is an urgent problem to be discussed and solved.

**SUMMARY**

Embodiments of the present disclosure provide a communication method, a communication environment sensing method, a communication apparatus, a network device, a computer-readable storage medium, and a computer program product, aimed at sensing a communication environment and matching a receiver according to the sensed communication environment.

In accordance with a first aspect of the present disclosure, an embodiment provides a communication method including: receiving an orthogonal frequency division multiplexing (OFDM) signal, where the OFDM signal includes at least a received pilot signal and a received data signal; performing channel estimation according to the received pilot signal to obtain a channel characteristic; obtaining first environment information according to the channel characteristic, where obtaining interference characteristic data according to the OFDM signal, and obtaining second environment information according to the interference characteristic data; obtaining communication environment sensing information according to the first environment information and the second environment information; and matching a receiver according to the communication environment sensing information.

In accordance with a second aspect of the present disclosure, an embodiment provides a communication environment sensing method, including: receiving an OFDM signal, where the OFDM signal includes at least a pilot signal and a data signal; performing channel estimation according to a pilot symbol carried by the pilot signal to obtain a channel characteristic; obtaining first environment information according to the channel characteristic, where obtaining corresponding interference characteristic data according to the OFDM signal, and obtaining second environment information according to the interference characteristic data; and obtaining communication environment sensing information according to the first environment information and the second environment information.

In accordance with a third aspect of the present disclosure, an embodiment provides a communication apparatus, including: a receiving unit configured to receive an OFDM signal, where the OFDM signal includes at least a received pilot signal and a received data signal; a first analysis unit configured to perform channel estimation according to the received pilot signal to obtain a channel characteristic, and obtain first environment information according to the channel characteristic; a second analysis unit configured to obtain interference characteristic data according to the OFDM signal, and obtain second environment information according to the interference characteristic data; and a processing unit configured to obtain communication environment sensing information according to the first environment information and the second environment information.

In accordance with a fourth aspect of the present disclosure, an embodiment provides a network device, including: a memory configured to store a computer program; and a processor configured to run the computer program to

**EP 4 557 677 A1**

perform the communication method of the first aspect or the communication environment sensing method of the second aspect.

In accordance with a fifth aspect of the present disclosure, an embodiment provides a computer-readable storage medium, storing computer-executable instructions configured to cause a computer to perform the communication method of the first aspect or the communication environment sensing method of the second aspect.

In accordance with a sixth aspect of the present disclosure, an embodiment provides a computer program product, including a computer program or computer instructions, where the computer program or the computer instructions are stored in a computer-readable storage medium, from which a processor of a computer device reads the computer program or the computer instructions, and the computer program or the computer instructions, when executed by the processor, cause the computer device to perform the communication method of the first aspect or the communication environment sensing method of the second aspect.

**BRIEF DESCRIPTION OF DRAWINGS**

FIG. 1 is a schematic diagram of a receiver and related apparatuses in an OFDM system;

FIG. 2 is a flowchart of a communication environment sensing method provided by an embodiment of the present disclosure;

FIG. 3 is a flowchart of a communication method provided by an embodiment of the present disclosure;

FIG. 4 is a flowchart of a communication method provided by an embodiment of the present disclosure;

FIG. 5 is a flowchart of a communication method provided by an embodiment of the present disclosure;

FIG. 6 is a flowchart of a communication method provided by an embodiment of the present disclosure;

FIG. 7 is a flowchart of a communication method provided by an embodiment of the present disclosure;

FIG. 8 is a flowchart of a communication method provided by an embodiment of the present disclosure;

FIG. 9 is a flowchart of a communication method provided by an embodiment of the present disclosure;

FIG. 10 is a schematic diagram of a communication apparatus provided by an embodiment of the present disclosure;

FIG. 12 is a schematic diagram of an OFDM system provided by an embodiment of the present disclosure;

FIG. 13 is a schematic diagram of a conventional receiver provided by an embodiment of the present disclosure;

FIG. 14 is a schematic diagram of an adaptive receiver provided by an embodiment of the present disclosure;

FIG. 15 is a schematic diagram of a neural-network receiver provided by an embodiment of the present disclosure;

FIG. 16 is a schematic diagram of a structure of a neural-network signal detector provided by an embodiment of the present disclosure;

FIG. 17 is a schematic diagram of a conventional receiver provided by an embodiment of the present disclosure; and

FIG. 18 is a schematic diagram of a structure of a conventional receiver in scenario n provided by an embodiment of the present disclosure.

**DETAILED DESCRIPTION**

In order to make the objectives, technical schemes and advantages of the present disclosure more apparent, the present disclosure is further described in detail in conjunction with the accompanying drawings and embodiments. It should be understood that the particular embodiments described herein are only intended to explain the present

3

disclosure, and are not intended to limit the present disclosure.

It is to be noted that although a functional module division is shown in a schematic diagram of an apparatus and a logical order is shown in a flowchart, the steps shown or described may be executed, in some cases, with a different module division from that of the apparatus or in a different order from that in the flowchart. The terms such as "first" and "second" in the description, claims and above-mentioned drawings are intended to distinguish between similar objects and are not necessarily to describe a specific order or sequence.

In the description of embodiments of the present disclosure, unless otherwise explicitly defined, the terms such as "configure", "install", and "connect" should be construed in a broad sense, and those skilled in the art can determine the specific meanings of the above terms in the present disclosure in a rational way in conjunction with the specific contents of embodiments of the technical schemes. In the embodiments of the present disclosure, the term such as "further," "exemplary," or "optionally" is used to represent as an example, an illustration, or a description and should not be construed as being more preferred or advantageous than another embodiment or design. The use of the term such as "further," "exemplary," or "optionally," is intended to present a related concept in a specific manner.

The embodiments of the present disclosure may be applied to various wireless communication systems, such as: a Global System for Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced long term evolution (LIE-A) system, a Universal Mobile Telecommunication System (UMTS), a 5th Generation (5G) system, a Beyond Fifth Generation (B5G) system, a 6G system, etc.

The embodiments of the present disclosure relate to the technology of receiver matching by ISAC. The ISAC technology uses the same spectrum resources to realize the fusion and symbiosis of communication functions and sensing functions through joint design of air interfaces and protocols, sharing of software and hardware devices, so that a wireless network in data communication can also analyze feature data of a wireless communication signal to obtain sensing of a target object or environment information. The use of ISAC technology not only improves spectrum utilization and a device reuse rate, but also broadens application scenarios of communication networks, for example, the ISAC technology is applied to adaptive matching receivers or intelligent matching receivers. Receivers, such as link-level receivers, adopt a unified processing framework and parameter configuration, and it is difficult to perform adaptive processing according to different communication scenarios, such as different communication environments, different noise interference, different user characteristics, and even different users, thus making it difficult to obtain good operation performance.

In order to describe the technical schemes in detail, an application scenario related to a receiver in an OFDM system is taken as an example, and an application scenario of the embodiments of the present disclosure is further described.

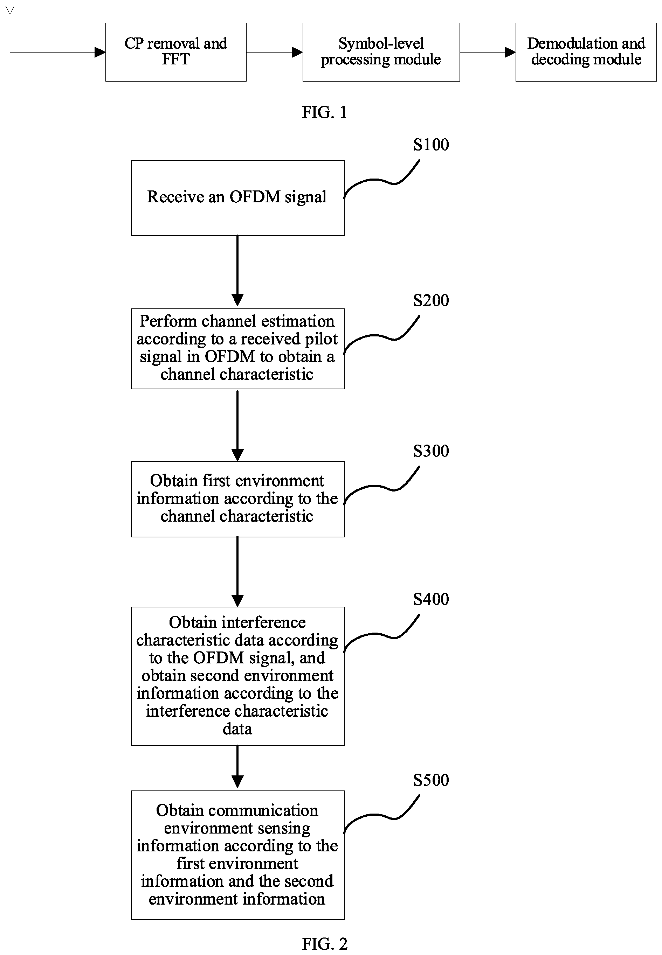

FIG. 1 is a schematic diagram of a receiver and related apparatuses in an OFDM system. As shown in FIG. 1, after a signal undergoes cyclic prefix (CP) removal and Fast Fourier Transform (FFT) processing, the signal is received by a symbol-level receiver (that is, the signal is input to a symbol-level processing module), and then processed by the symbol-level receiver and input to a demodulation and decoding module. The implementation of the present disclosure may be applied to various receivers, such as: a conventional receiver, a new intelligent receiver, a receiver with an adaptive capability, a receiver with a neural network prediction model, etc.

In the OFDM system shown in FIG. 1, assuming that a received frequency domain signal is denoted by Y, then:

$$Y = HX + N \qquad (1)$$

Here, X is a modulated transmitted signal, H is a wireless channel matrix between transmission and reception, and N is additive white Gaussian noise.

In some technologies, communication physical layer receivers adopts a unified receiver processing framework and unified configuration parameters, which makes it difficult to sense complex communication environments such as wireless communication environments, and thus unable to dynamically adjust to an optimal reception algorithm according to the different wireless communication environments. In some other technologies, there are physical layer OFDM receivers based on artificial intelligence (AI), such as a model-driven OFDM receiver, a data-driven OFDM receiver, or a data-model dual-driven OFDM receiver. However, the above-mentioned technologies have insufficient ability to sense complex communication environments such as wireless communication environments, which makes it difficult for the OFDM receiver to obtain good performance matching the wireless communication environment.

The embodiments of the present disclosure will be explained below by taking a wireless communication environment as an example.

Embodiments of the present disclosure provide a wireless communication method, a wireless communication environment sensing method, a wireless communication apparatus, a network device, a computer-readable storage medium, and a computer program product. By analyzing a wireless communication signal, communication environment sensing information is obtained, thereby better sensing a wireless communication environment. Further, in another embodiment of the present disclosure, by sensing the wireless communication environment, different receivers can be selected in different wireless communication environments, thereby realizing intelligent dynamic regulation of receivers such as link-level receivers and improving system performance.

The embodiments of the present disclosure will be further explained below with reference to the accompanying drawings.

FIG. 2 is a flowchart of a communication environment sensing method provided by an embodiment of the present disclosure. As shown in FIG. 2, the communication environment sensing method can be applied to an OFDM communication system. In the embodiment shown in FIG. 2, the communication environment sensing method may include, but is not limited to, steps S100, S200, S300, S400, and S500.

At S100, an OFDM signal is received.

In an embodiment, the OFDM signal may include a received pilot signal $Y_{Pilot}$ and a received data signal $Y_{Data}$.

In an embodiment, the received pilot signal $Y_{Pilot}$ may include one or more received pilot symbols. In some examples, the received pilot signal includes a first received pilot signal.

In an embodiment, the received data signal $Y_{Data}$ may include one or more received data symbols. In some examples, the received data signal includes a first received data signal and a second received data signal.

Specifically, in a slot, the received pilot signal $Y_{Pilot}$ and the received data signal $Y_{Data}$ may occupy a plurality of OFDM symbols in total. For example, the received pilot and the received data may occupy a total of 14 OFDM signals, or a total of 7 OFDM signals, or otherwise. Here, the received pilot may occupy one or more OFDM symbols. For example, the received pilot occupies a 1$^{st}$ OFDM symbol, and the received data occupies the remaining other OFDM symbols. Alternatively, the received pilot occupies the 1$^{st}$ and 8$^{th}$ OFDM symbols, and the received data occupies the remaining other OFDM symbols.

At S200, channel estimation is performed according to the received pilot signal $Y_{Pilot}$ in OFDM to obtain a channel characteristic.

In an embodiment, the channel estimation may use a training sequence-based estimation algorithm or may use a blind estimation algorithm. The training sequence-based estimation algorithm may include a least square channel estimation (LS channel estimation) algorithm, a minimum mean square error channel estimation (MMSE channel estimation) algorithm, a low-complexity linear minimum mean square error channel estimation (LMMSE channel estimation) algorithm, or the like, which is not limited in the embodiments of the present disclosure. In order to facilitate the explanation of the present technical scheme, the following provides description with LS channel estimation as an example.

In an embodiment, the channel characteristics may include one or more of frequency domain fading factor, time correlation factor, energy distribution of time-domain channel estimation values, or Rice factor. The channel characteristic may also include other parameters, data, or content that can be used to represent a channel feature.

At S300, first environment information is obtained according to the channel characteristic.

In an embodiment, the first environment information may include one or more of communication environment speed information, communication line-of-sight (LoS) information, or communication environment multipath delay information; and the first environment information may also include other information that can be used to represent a communication environment condition.

In another embodiment, the first environment information may include one or more of terminal device characteristic information or user characteristic information. Here, the terminal device characteristic information is parameter information for representing a terminal device characteristic, and the user characteristic information is parameter information for representing a user characteristic.

In another embodiment, the communication environment speed information may include one or more of high speed, medium speed, or low speed;

the communication LoS information may include one or more of line of sight or non line of sight (NLoS); and

the communication multipath delay information may include one or more of high multipath delay or low multipath delay.

In another embodiment, the obtaining first environment information according to the channel characteristic may include comparing the channel characteristic with a preset threshold to obtain the first environment information; or inputting the channel characteristic into a neural network to obtain the first environment information.

At S400, interference characteristic data is obtained according to the OFDM signal, and second environment information is obtained according to the interference characteristic data.

In an embodiment, the interference characteristic data may include one or more of noise interference, received signal strength indicator (RSSI), or covariance matrix of a signal; and the interference characteristic data may also include other data that can be used to represent a communication interference feature.

In another embodiment, the noise interference may include one or more of full bandwidth noise interference power, noise interference in a space-frequency domain dimension, or noise interference power of a resource block (RB) granularity. The noise interference may also include other parameters, data, or content that can be used to represent a communication noise interference feature.

In an embodiment, the second environment information may include communication interference information.

In another embodiment, the communication interference information may include one or more of presence interference, no interference, interference intensity information, or interference position information. The communication interference information may also include other information that can be used to represent a communication interference feature.

In another embodiment, the obtaining interference characteristic data according to the OFDM signal, and obtaining second environment information according to the interference characteristic data may include: comparing the interference characteristic data with a communication interference threshold to obtain the second environment information; or inputting the interference characteristic data into a second neural network to obtain the second environment information; or according to the interference characteristic data, obtaining the second environment information by a clustering algorithm such as a K-means clustering algorithm.

At S500, communication environment sensing information is obtained according to the first environment information and the second environment information.

This embodiment of the present disclosure provides the communication environment sensing method, in which communication environment sensing information is obtained by extracting and analyzing a characteristic of a communication environment, so that a wireless communication environment can be better sensed. This not only improves an ability to sense the environment in a communication scenario, but also make better use of a wireless signal to acquire information about a surrounding physical environment, tap communication abilities, and enhance user experience.

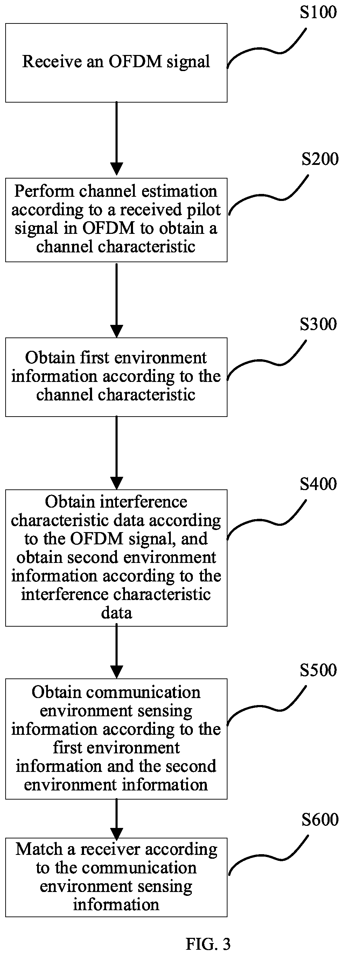

FIG. 3 is a flowchart of a communication method provided by an embodiment of the present disclosure. As shown in FIG. 3, the communication method may include, but is not limited to, steps S100, S200, S300, S400, S500, and S600.

At S100, an OFDM signal is received.

At S200, channel estimation is performed according to a received pilot signal $Y_{Pilot}$ in OFDM to obtain a channel characteristic.

At S300, first environment information is obtained according to the channel characteristic.

At S400, interference characteristic data is obtained according to the OFDM signal, and second environment information is obtained according to the interference characteristic data.

At S500, communication environment sensing information is obtained according to the first environment information and the second environment information.

At S600, a receiver is matched according to the communication environment sensing information.

This embodiment of the present disclosure provides the communication method, in which the communication environment sensing information is obtained by extracting and analyzing a characteristic of a communication environment, and different receivers are selected in different wireless communication environments according to the communication environment sensing information, so that receivers, such as link-level receivers, can be intelligently and dynamically regulated and system performance is improved. It should be noted that content described in the above communication environment sensing method are also applicable to this embodiment.

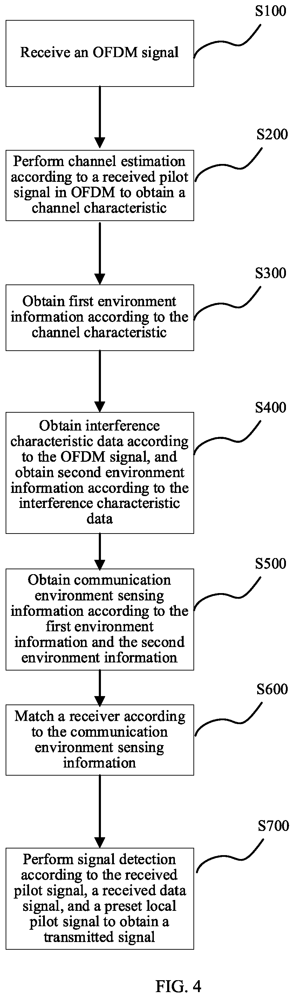

FIG. 4 is a flowchart of a communication method provided by an embodiment of the present disclosure. As shown in FIG. 4, the communication method may further include step S700.

At S700, signal detection is performed according to the received pilot signal $Y_{Pilot}$, a received data signal $Y_{Data}$, and a preset local pilot signal $X_{Pilot}$ to obtain a transmitted signal.

This embodiment of the present disclosure provides the communication method, in which communication environment sensing information is obtained by sensing a communication environment, and different receivers are matched. This not only realizes intelligent dynamic regulation of the receivers, but also improves system performance.

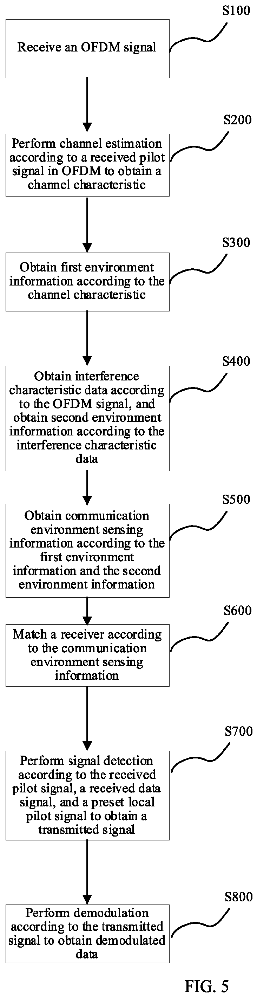

FIG. 5 is a flowchart of a communication method provided by an embodiment of the present disclosure. As shown in FIG. 5, the communication method may further include step S800.

At S800, demodulation is performed according to the transmitted signal to obtain demodulated data.

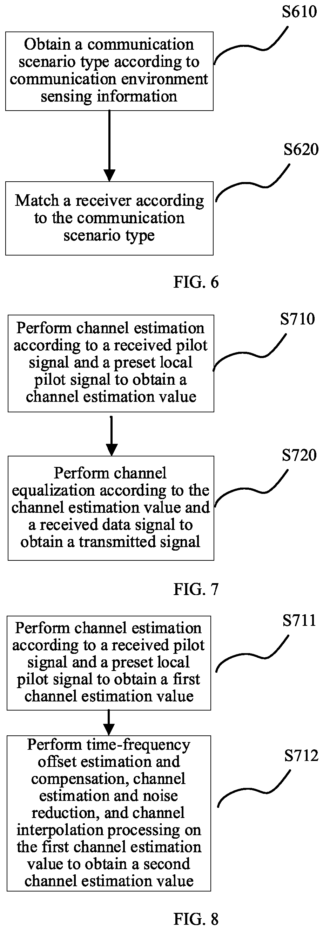

FIG. 6 is a flowchart of a communication method provided by an embodiment of the present disclosure, and is also a further explanation of step S600. As shown in FIG. 6, step S600 may include, but is not limited to, steps S610 and S620.

At S610, a communication scenario type is obtained according to the communication environment sensing information.

In an embodiment, the communication scenario type may be comprehensively determined according to one or more of communication environment speed information, communication LoS information, communication multipath delay information, terminal device characteristic information, user characteristic information, or communication interference information. It should be noted that different communication scenario types may be constructed in different combinations, which is not limited in this embodiment of the present disclosure.

In order to facilitate further elaboration of the communication scenario types of this embodiment of the present disclosure, the following provides exemplary description of the communication scenario types using a combination of the communication environment speed information, the communication LoS information, the communication multipath delay information, and the communication interference information.

Table 1 is a list of communication types provided by an embodiment of the present disclosure, and includes nine different communication scenario types.

Table 1 List of communication scenario types

| Type No. | Communication scenario |
|---|---|
| 1 | LoS, and low speed |
| 2 | LoS, and medium speed |
| 3 | LoS, and high speed |
| 4 | NLoS, low speed, and low multipath delay |
| 5 | NLoS, medium speed, and low multipath delay |
| 6 | NLoS, high speed, and low multipath delay |
| 7 | NLoS, low speed, and high multipath delay |
| 8 | NLoS, medium speed, and high multipath delay |
| 9 | NLoS, high speed, and high multipath delay |

Table 2 is a list of communication types provided by another embodiment of the present disclosure, and includes 18 different communication scenario types.

Table 2 List of communication scenario types

| Type No. | Communication scenario |
|---|---|
| 1 | No interference, LoS, and low speed |
| 2 | No interference, LoS, and medium speed |
| 3 | No interference, LoS, and high speed |
| 4 | No interference, NLoS, low speed, and low multipath delay |
| 5 | No interference, NLoS, medium speed, and low multipath delay |
| 6 | No interference, NLoS, high speed, and low multipath delay |
| 7 | No interference, NLoS, low speed, and high multipath delay |
| 8 | No interference, NLoS, medium speed, and high multipath delay |
| 9 | No interference, NLoS, high speed, and high multipath delay |
| 10 | Presence of interference, LoS, and low speed |
| 11 | Presence of interference, LoS, and medium speed |
| 12 | Presence of interference, LoS, and high speed |
| 13 | Presence of interference, NLoS, low speed, and low multipath delay |
| 14 | Presence of interference, NLoS, medium speed, and low multipath delay |
| 15 | Presence of interference, NLoS, high speed, and low multipath delay |
| 16 | Presence of interference, NLoS, low speed, and high multipath delay |
| 17 | Presence of interference, NLoS, medium speed, and high multipath delay |
| 18 | Presence of interference, NLoS, high speed, and high multipath delay |

At S620, a receiver is matched according to the communication scenario type.

In an implementation, the receiver may be a conventional receiver, an intelligent receiver, a neural-network receiver, or any other type of receiver.

In another embodiment, the neural-network receiver may be a receiver with a neural-network detector, which may be trained in advance.

FIG. 7 is a flowchart of a communication method provided by an embodiment of the present disclosure, and is also a further explanation of step S700. As shown in FIG. 7, step S700 may include, but is not limited to, steps S710 and S720.

At S710, channel estimation is performed according to the received pilot signal $Y_{Pilot}$ and the preset local pilot signal $X_{Pilot}$ to obtain a channel estimation value $\hat{H}_{LS}$.

At S720, channel equalization is performed according to the channel estimation value $\hat{H}_{LS}$ and the received data signal $Y_{Data}$ to obtain a transmitted signal $\hat{X}_{Data}$.

Exemplary explanation of the above step is provided below by taking the received pilot signal $Y_{Pilot}$ including a first received pilot signal $Y_{Pilot,1}$, and the received data signal $Y_{Data}$ including a first received data signal $Y_{Data,1}$ and a second received data signal $Y_{Data,2}$ as an example.

Channel estimation is performed according to the first received pilot signal $Y_{Pilot,1}$ and the local pilot signal $X_{Pilot}$ to obtain a first channel estimation value $\hat{H}_{LS,1}$.

Channel equalization is performed according to the first channel estimation value $\hat{H}_{LS,1}$ and the first received data signal $Y_{Data,1}$ to obtain a first transmitted data estimated value $\hat{X}_{Data,1}$.

A hard decision is performed according to the first transmitted data estimated value $\hat{X}_{Data,1}$ to obtain hard decision data.

Channel estimation is performed according to the hard decision data and the first received data symbol $Y_{Data,1}$ to obtain a second channel estimation value $\hat{H}_{LS,2}$.

Channel equalization is performed according to the second channel estimation value $\hat{H}_{LS,2}$ and the second received data signal $Y_{Data,2}$ to obtain a second transmitted data estimated value $\hat{X}_{Data,2}$.

FIG. 8 is a flowchart of a communication method provided by an embodiment of the present disclosure, and is also a further explanation of step S710. As shown in FIG. 8, step S710 may include, but is not limited to, steps S711 and S712.

At S711, channel estimation is performed according to the received pilot signal $Y_{Pilot}$ and the preset local pilot signal $X_{Pilot}$ to obtain the first channel estimation value $\hat{H}_{LS,1}$.

At S712, time-frequency offset estimation and compensation, channel estimation and noise reduction, and channel interpolation processing are performed on the first channel estimation value to obtain the second channel estimation value $\hat{H}_{LS,2}$.

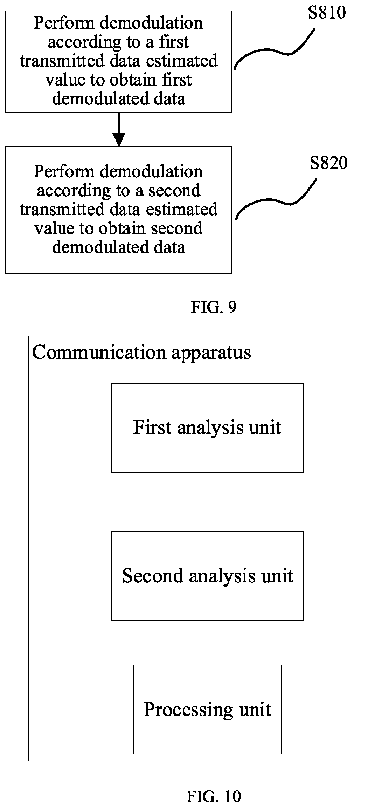

FIG. 9 is a flowchart of a communication method provided by an embodiment of the present disclosure, and is also a further explanation of step S800. As shown in FIG. 9, step S800 may include, but is not limited to, steps S810 and S820.

At S810, demodulation is performed according to the first transmitted data estimated value $\hat{X}_{Data,1}$ to obtain first demodulated data $\hat{S}_1$.

At S820, demodulation is performed according to the second transmitted data estimated value $\hat{X}_{Data,2}$ to obtain second demodulated data $\hat{S}_2$.

FIG. 10 is a schematic diagram of a communication apparatus provided by an embodiment of the present disclosure. As shown in FIG. 10, the communication apparatus includes a receiving unit, a first analysis unit, a second analysis unit, and a processing unit.

The receiving unit is configured to receive an OFDM signal, where the OFDM signal includes at least a received pilot signal and a received data signal.

The first analysis unit is configured to perform channel estimation according to the received pilot signal to obtain a channel characteristic, and obtain first environment information according to the channel characteristic, where the first environment information includes at least one of: communication environment speed information, communication line-of-sight (LoS) information, communication multipath delay information.

The second analysis unit is configured to obtain interference characteristic data according to the OFDM signal, and obtain second environment information according to the interference characteristic data, where the second environment information includes at least communication interference information.

The processing unit is configured to obtain communication environment sensing information according to the first environment information and the second environment information.

This embodiment of the present disclosure provides the communication apparatus, which can obtain the communication environment sensing information by extracting and analyzing a characteristic of a communication environment, thereby better sensing a wireless communication environment. This not only improves an ability to sense the environment in a communication scenario, but also make better use of a wireless signal to acquire information about a surrounding physical environment, tap communication abilities, and enhance user experience.

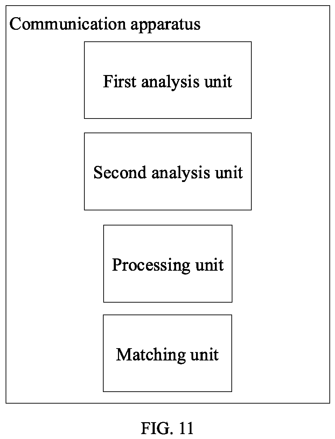

As shown in FIG. 11, the communication apparatus may further include a matching unit.

The matching unit configured to match a receiver according to the communication environment sensing information.

This embodiment of the present disclosure provides another communication apparatus, which can obtain the communication environment sensing information by extracting and analyzing a characteristic of a communication environment, and different receivers are selected in different wireless communication environments according to the communication environment sensing information, so that receivers, such as link-level receivers, can be intelligently and dynamically regulated and system performance is improved.

An ISAC adaptive receiver according to an embodiment of the present disclosure can better detect a transmitted signal X from a received signal Y in different communication environments, such as a wireless transmission environment, which includes, but is not limited to, the following steps:

**At step 1,** intelligent sensing and identification is performed, that is, an OFDM signal, for example, an OFDM frequency domain signal, is used to sense and identify a wireless transmission environment and interference existing in the environment. An exemplary manner is as follows:

☐ An OFDM frequency domain signal is used to sense a wireless transmission environment and identify a wireless channel scenario in which a current terminal device or user is located. An OFDM pilot signal is used to identify a wireless channel scenario. Sensing and identification algorithms include, but are not limited to, a conventional algorithm, based on expert experience, of extracting a channel characteristic to make a threshold decision, or an algorithm, based on expert experience, of extracting a channel characteristic for use with a neural network, etc.

☐ The OFDM frequency domain signal is used to sense whether there is interference or interference intensity in the environment, and to identify whether there is interference on a current space-time-frequency three-dimensional resource, a type of interference, or interference intensity. Full bandwidth noise interference power, RSSI, noise interference in a space-frequency domain dimension, or a covariance matrix of the signal can be used for interference sensing and identification. Sensing and identification algorithms include, but are not limited to, a conventional algorithm, based on expert experience, of extracting an interference characteristic to make a threshold decision, or an algorithm, based on expert experience, of extracting an interference characteristic for use with a neural network, etc.

☐ Comprehensive decision is performed: A comprehensive decision is made according to sensing and identification results of the wireless transmission environment and interference in the environment, to determine a specific scenario in a scenario set in which the current user is located. A set of scenario types is exemplarily shown as: interference-free wireless channel scenario 1, 2, ..., N, and interference-present scenarios 1, 2, ..., N.

**At step 2,** a receiver is matched, that is, a receiver matching the wireless transmission environment is adaptively selected according to the identification result for OFDM signal detection.

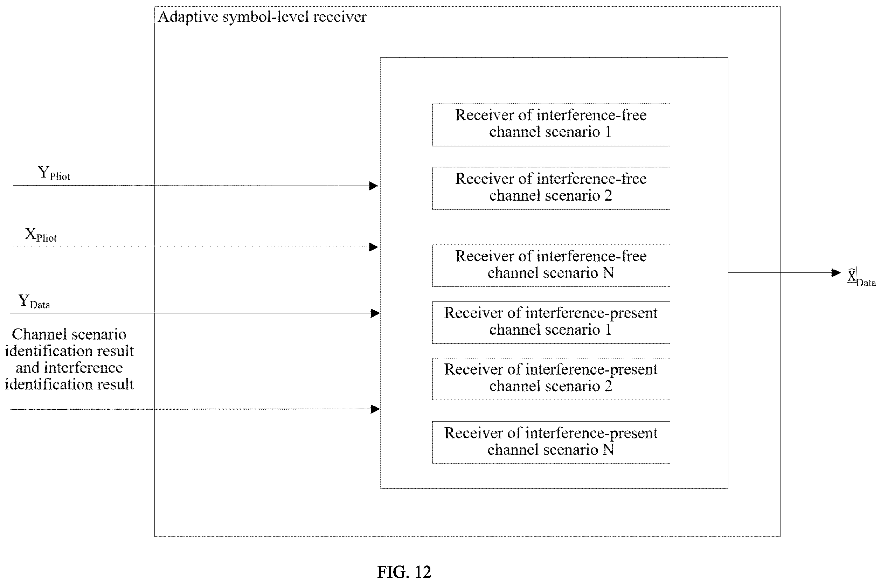

FIG. 12 is a schematic diagram of an OFDM system provided by an embodiment of the present disclosure. As shown in FIG. 12, in the OFDM system, a received signal is denoted by Y, $Y_{Data}$ represents received data, $Y_{Pilot}$ represents a received pilot, and $X_{Pilot}$ represents a local pilot at a receive end.

According to step 1, a channel scenario identification result and an interference identification result are obtained. A receiver best matching a current transmission/communication environment is selected from a set of receivers in different scenarios, and then $Y_{Data}$, $Y_{Pilot}$, and $X_{Pilot}$ are input to the selected receiver for signal detection to obtain a final transmitted data estimated value $\hat{X}_{Data}$. *The* receiver in each scenario may detect a plurality of OFDM data symbols in a slot together, or may perform streaming detection on a plurality of OFDM symbols in a slot.

Here, the receivers in different scenarios may be conventional receivers, for which there are different algorithm flow processing depending on different scenarios. For example, with different multipath delay spreads, a channel estimation module may use filters with different window lengths to eliminate noise and interference, and with different speeds, different pilot configurations and different frequency offset estimation and compensation algorithms may be used. The receivers may alternatively be intelligent adaptive receivers. Each scenario corresponds to a neural-network signal detector. These neural-network signal detectors are trained offline in advance to form a model set for online detection. A structure of the neural network includes, but is not limited to, a deep neural network, a convolutional neural network, a residual neural network, or a residual neural network with an attention mechanism.

At step 3, the transmitted data estimated value $\hat{X}_{Data}$ obtained in step 2 is sent to a demodulation and decoding module for subsequent processing. Algorithms of the demodulation and decoding module include, but are not limited to, a conventional algorithm and a neural network-based algorithm.

In order to further explain the communication environment sensing method, the communication apparatus, the network device, the computer-readable storage medium, and the computer program product provided by the embodiments of the present disclosure, the following description will be provided in conjunction with different examples.

Example 1:

In an OFDM system, $Y_{Data}$ represents received data, $Y_{Pilot}$ represents a received pilot, and $X_{Pilot}$ represents a local pilot at a receive end. In a slot, the received data and the received pilot occupy a total of 14 OFDM symbols, the received pilot occupies the 1st and 8th OFDM symbols, and the received data occupies the remaining 12 OFDM symbols. Specific steps of OFDM signal detection in this example are as follows:

At step 1, intelligent sensing and identification is performed, that is, an OFDM frequency domain signal is used to sense and identify a wireless transmission environment and interference existing in the environment.

Two received pilot signals in OFDM frequency domain are used to sense the wireless transmission environment and identify a wireless channel scenario in which a current terminal device is located. Target wireless channel scenarios sensed are: low speed (for example, below 30 kmh), medium speed (for example, 30 kmh to 60 kmh), and high speed scenarios (for example, greater than 60 kmh). A specific sensing algorithm may be as follows: Two pilot symbols are used for channel estimation, and then channel characteristics are extracted, such as a frequency domain fading factor $\beta$ which represents a frequency domain change characteristic of a wireless channel and a time correlation factor $\lambda$ which represents a Doppler change characteristic of a user. These two factors are compared with threshold $\eta_\beta$ and $\eta_\lambda$, respectively, and speed judgment is performed according to the following rules:

Low speed:

$$\beta < \eta_{\beta,1}$$

and

$$\lambda > \eta_{\lambda,1}$$

Medium speed:

$$\eta_{\beta,1} < \beta < \eta_{\beta,2}$$

and

$$\eta_{\lambda,1} > \lambda > \eta_{\lambda,2}$$

High speed:

$$\beta > \eta_{\beta,2}$$

and

$$\lambda < \eta_{\lambda,2}$$

Here, $\eta_{\beta,1}$, $\eta_{\beta,2}$, $\eta_{\lambda,1}$, and $\eta_{\lambda,2}$ may be determined according to empirical parameters or by simulation.

Noise interference power of an OFDM frequency domain Resource Block (RB) granularity is used to sense the interference existing in the environment, and identify whether there is interference, an interference source, and interference intensity on a current frequency domain resource. RB-level noise interference power in the entire bandwidth in frequency domain is collected, and then a K-means clustering algorithm is used to identify which RBs in the entire bandwidth have interference and interference intensity.

Comprehensive decision is performed: A comprehensive decision is made according to sensing and identification results of the wireless transmission environment and interference in the environment, to determine a specific scenario in a scenario set in which all scheduling RBs of the current terminal device are located. The scenario set may include the following six types: interference-free low speed, medium speed and high speed, interference-present low speed, medium speed and high speed. Results of the recognition of the wireless channel scenario are the same for all RBs, but a recognition result of interference is RB level. In this example, all RBs of the UE are decided one by one, to finally obtain an RB-level identification result.

Step 2: adaptive receiver: A receiver matching the wireless transmission environment is adaptively selected according to the RB-level scenario identification result in step 1 for OFDM signal detection. As shown in FIG. 12, processing in the figure includes a processing flow for each RB. According to the channel scenario identification result and the interference identification result obtained in step 1, a receiver that best matches a current transmission environment is selected from a set of receivers for different scenarios.

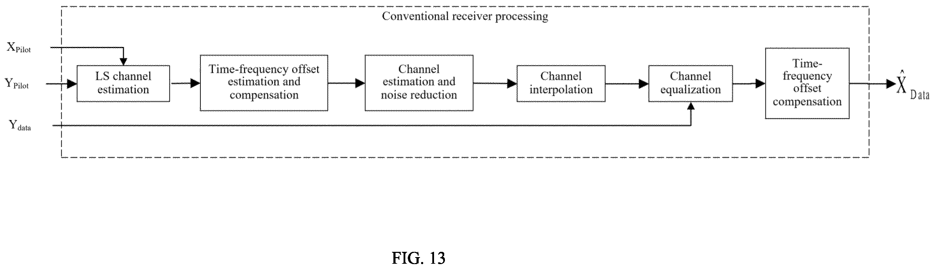

FIG. 13 is a schematic diagram of a conventional receiver provided by an embodiment of the present disclosure. The receivers for different scenarios of this example use a conventional receiver as shown in FIG. 13. $Y_{Pilot}$ and $X_{Pilot}$ are input to an LS channel estimation module to obtain a preliminary channel estimation value, then time-frequency offset estimation and compensation is performed, next, channel estimation and noise reduction processing (using a time domain noise reduction or frequency domain filtering algorithm) is performed to obtain a more accurate channel estimation value, and channel interpolation is performed to obtain a signal estimated value on a data symbol. Then channel equalization is performed by using the signal estimated value and $Y_{Data}$. Finally, time-frequency offset compensation is performed on an equalization result to obtain a transmitted data estimated value $\dot{X}_{Data}$. The above operations are to detect a plurality of OFDM data symbols in a slot together, that is, after channel estimation values on all pilots are obtained, channel interpolation can be performed to obtain channel estimation values on all data symbols.

At step 3, the transmitted data estimated value $\dot{X}_{Data}$, on 12 data symbols on all the RBs, obtained in step 2 is sent to a demodulation and decoding module for subsequent processing. The demodulation and decoding module uses a conventional algorithm.

Example 2:

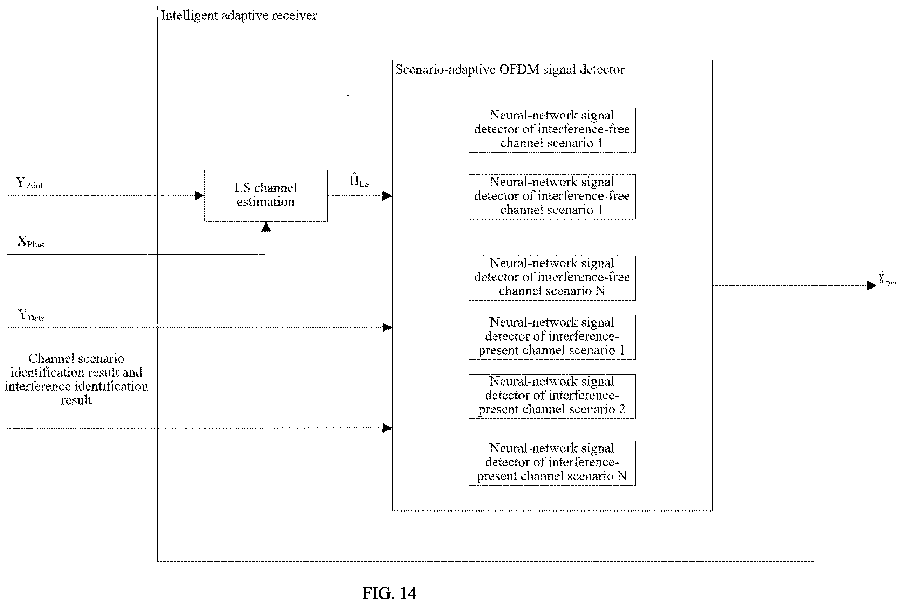

FIG. 14 is a schematic diagram of an adaptive receiver provided by an embodiment of the present disclosure. The adaptive receiver in step 2 in the first embodiment may also be an intelligent adaptive receiver as shown in FIG. 14. The intelligent adaptive receiver includes an LS channel estimation submodule and a submodule of a scenario-adaptive OFDM signal detector.

1. LS signal estimation submodule: First, $X_{Pilot}$ and $Y_{Pilot}$ are input to the LS channel estimation submodule, and an LS channel estimation value $\hat{H}_{LS}$ is obtained by formula (2). Here, $\hat{H}_{LS}$ contains information about two pilot symbols.

$$\hat{H}_{LS} = Y_{Pilot} / X_{Pilot} \qquad (2)$$

2. Scenario-adaptive OFDM signal detector: A set of neural-network signal detectors of this example may include the following six types: interference-free low speed, medium speed and high speed neural-network signal detectors, and interference-present low speed, medium speed and high speed neural-network signal detectors. These six neural-network signal detectors are pre-trained offline for on-line detection. According to the channel scenario identification result and the interference identification result obtained in step 1, a neural network model that best matches a current transmission environment is selected from a set of neural-network signal detector models.

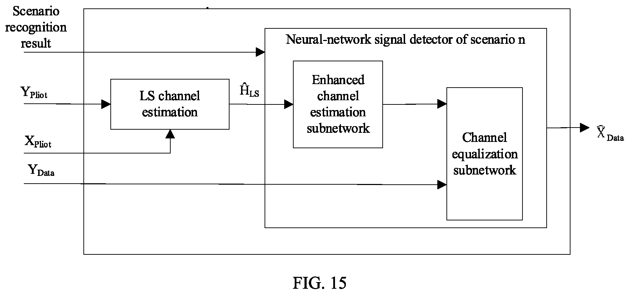

FIG. 15 is a schematic diagram of a neural-network receiver provided by an embodiment of the present disclosure. A structure of the neural-network signal detector in each scenario is shown in FIG. 15. $\hat{H}_{LS}$ (containing information about two pilot symbols) and $Y_{Data}$ (containing data of 12 data symbols) are input into a neural-network model selected based on the identification result for online detection, and a final transmitted data estimated value $\hat{X}_{Data}$ is obtained.

The neural-network signal detector consists of two subnetworks: enhanced channel estimation subnetwork and channel equalization subnetwork. The enhanced channel estimation subnetwork plays the role of removing noise and interference, improving the quality of a channel estimation value, and has a function of channel interpolation to obtain a channel estimation value of a data symbol. The channel equalization subnetwork is used for OFDM signal detection, in replacement of a conventional channel equalization function. Both subnetworks use residual neural networks with a channel attention mechanism. The two subnetworks are trained together, using a Mean Square Error (MSE) of transmitted data and its estimated value as a loss function, as shown in the following formula (3):

$$loss(X_{Data}, \hat{X}_{Data}) = \frac{1}{n} \sum_{i=0}^{n} \left( X_{Data,i} - \hat{X}_{Data,i} \right)^2 \qquad (3)$$

Here, n is a number of batch size samples per training. During model training, based on the loss function of formula (3), an Adam optimizer is used to train the neural network. After the loss function converges to a certain extent, network training is completed, and model parameters are saved for subsequent online signal detection.

Example 3:

In an OFDM system, $Y_{Data}$ represents frequency domain received data, $Y_{Pilot}$ represents a received pilot, and $X_{Pilot}$ represents a local pilot at a receive end. The data and pilot occupy a total of 12 OFDM symbols, to be specific, the pilot

occupies the 1st and 6th OFDM symbols, and the data occupies the remaining 10 OFDM symbols. Specific steps of OFDM signal detection in this example are as follows:

At step 1, intelligent sensing and identification is performed, that is, an OFDM frequency domain signal is used to sense and identify a wireless transmission environment and interference existing in the environment.

Two pilot signals in OFDM frequency domain are used to sense a wireless transmission environment and identify a wireless channel scenario in which a current user is located. There are nine target wireless channel scenarios sensed in this example, as shown in Table 1. A specific sensing algorithm is as follows: Two pilot symbols are used for channel estimation, and then channel characteristics are extracted, such as a frequency domain fading factor $\beta$ which represents a frequency domain change characteristic of a wireless channel, a time correlation factor $\lambda$ which represents a Doppler change characteristic of a user, energy distribution $\delta$ of time-domain channel estimation values, or a Rice factor $K$. These four channel characteristics form a characteristic set: $v = [\beta, \lambda, \delta, K]$, which is input to a fully connected neural network for online identification, to sense a specific wireless channel scenario in Table 1 in which the current user is located. The fully connected neural network includes an input layer, two hidden layers, and one output layer, and is pre-trained offline.

Noise interference power of an OFDM frequency domain RB granularity is used to sense the interference existing in the environment, and identify whether there is interference, and interference intensity on a current frequency domain resource. RB-level noise power $NI_{RB}$ in the entire bandwidth in frequency domain and a covariance matrix $R_{RB}^{NI}$ of RB-level noise interference power in spatial domain are collected. These two interference characteristics constitute an interference characteristic set $\chi = [NI_{RB}, R_{RB}^{NI}]$, which is input to a convolutional neural network for online identification, to sense which RBs in the entire bandwidth have interference at the current moment, which space domain directions have interference, and interference intensity. The convolutional neural network includes one input layer, two convolutional layers, two pooling layers, one fully connected layer and one output layer, and is pre-trained offline.

Comprehensive decision is performed: A comprehensive decision is made according to sensing and identification results of the wireless transmission environment and interference in the environment, to determine a specific scenario in a scenario set in which the current user is located. There are 18 scenarios in the scenario set: nine interference-present scenarios and nine interference-free scenarios, as shown in Table 2. Results of the recognition of the wireless channel scenario are the same for all RBs, but a recognition result of interference is RB level. Here, all the RBs of UE are grouped. Assuming that four RBs constitute one RB group (RBs of a quantity less than four are considered as one RB group), then once a decision result on an RB in an RB group has interference, it is considered that the RB group has interference, and an RB group-level identification result is finally obtained.

Step 2: intelligent adaptive receiver: An intelligent receiver matching the wireless transmission environment is adaptively selected according to the RB group-level scenario identification result in step 1 for OFDM signal detection, as shown in FIG. 14. Processing in FIG. 14 includes a processing flow of each RB group. The intelligent adaptive receiver includes an LS channel estimation submodule and a submodule of a scenario-adaptive OFDM signal detector.

    1. A suitable neural-network OFDM signal detector is selected. According to the channel scenario identification result and the interference identification result obtained in step 1, a neural network model that best matches a current transmission environment is selected from a set of neural-network signal detector models (18 types in total, as shown in Table 2). All models in the set of neural-network signal detectors are pre-trained offline for online detection.

    2. OFDM signal detection is performed.

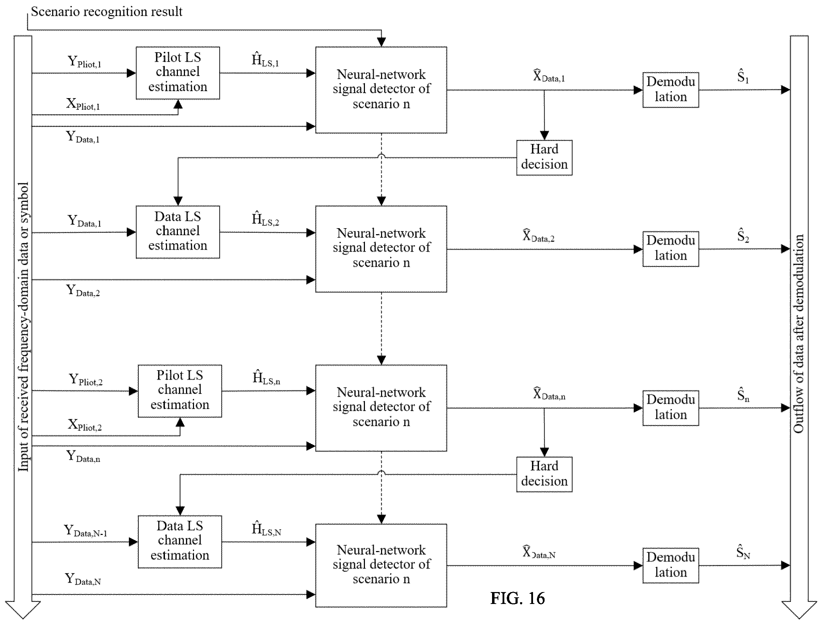

FIG. 16 is a schematic diagram of a structure of a neural-network signal detector provided by an embodiment of the present disclosure. A structure of the neural-network signal detector in each scenario in this example is shown in FIG. 6, and a plurality of OFDM signals are detected according to a streaming structure.

First, a first pilot symbol $Y_{Pilot,1}$ and a local pilot $X_{Pilot,1}$ at a receive end are subjected to pilot LS channel estimation to obtain an LS channel estimation value $\hat{H}_{LS,1}$, which is then input to a selected neural-network signal detector together with a first data symbol $Y_{Data,1}$ to obtain a transmitted data estimated value $\hat{X}_{Data,1}$ of the first data symbol.

Then, the estimated value $\hat{X}_{Data,1}$ of the first data symbol is input to the demodulation module for demodulation to obtain a demodulation result $\hat{S}_1$ of the first data symbol, which is input to a hard decision module for hard decision.

A hard decision result is input to a data LS channel estimation module together with the first data symbol $Y_{Data,1}$ to obtain an LS channel estimation result $\hat{H}_{LS,2}$, which is then input to a selected neural-network signal detector together with a second data symbol $Y_{Data,2}$ to obtain a transmitted data estimated value $\hat{X}_{Data,2}$ of the second data symbol. The estimated value $\hat{X}_{Data,2}$ of the second data symbol is input to the demodulation module and the hard decision module separately.

A subsequent processing flow of pilot and data symbol is the same as the previously described until a demodulation result of a last data symbol is obtained.

Here, a neural-network signal detector in each scenario uses a convolutional neural network with a residual.

During offline training, an Adam optimizer is used for training with an MSE of transmitted data and its estimated value used as a loss function, as shown in formula (3). After the loss function converges to a certain extent, network training is completed, and model parameters are saved for subsequent online signal detection.

At step 3, respective transmitted data estimated values $\hat{X}_{Data}$ on 10 data symbols are sequentially obtained in step 2, and are demodulated in a streaming manner, and demodulation results are finally combined for decoding. The demodulation and decoding module uses a conventional algorithm.

Example 4:

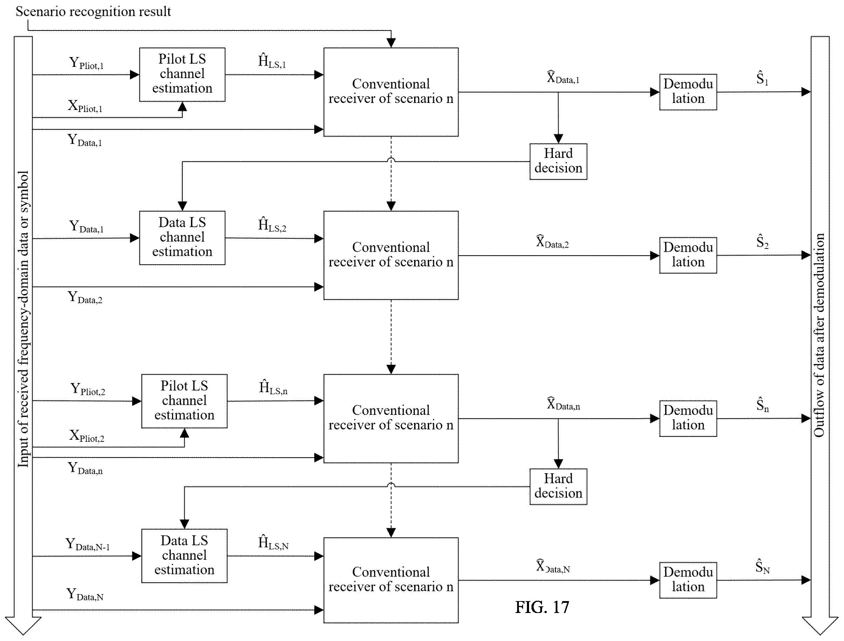

FIG. 17 is a schematic diagram of a conventional receiver provided by an embodiment of the present disclosure. As shown in FIG. 17, a difference between this example and example 3 is that a conventional receiver of scenario n replaces a neural-network signal detector of scenario n.

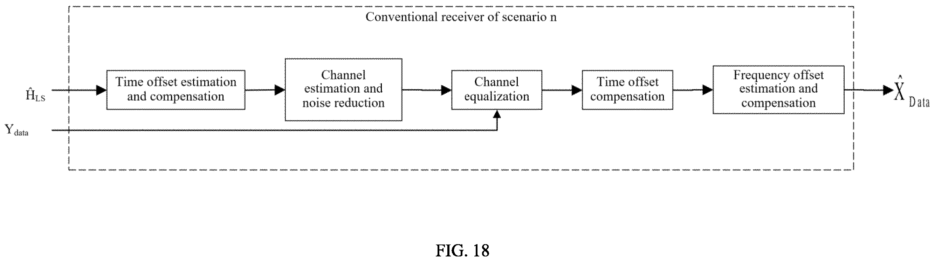

FIG. 18 is a schematic diagram of a structure of a conventional receiver in scenario n provided by an embodiment of the present disclosure. As shown in FIG. 18, for each group of LS channel estimation values $\hat{H}_{LS}$, a frequency domain correlated algorithm is used to estimate a time offset, and time offset compensation on pilot is performed. Then, a channel estimation value after the time offset compensation is processed by a time domain noise reduction algorithm to obtain a channel estimation value on a pilot symbol. Next, channel equalization processing is performed on the channel estimation value and a first data symbol $Y_{Data}$. A channel equalization algorithm uses an MMSE equalizer based on maximum ratio combining. Equalized data is subjected to time offset compensation and then frequency offset estimation and compensation to have a frequency offset on the data corrected. Finally, data $\hat{X}_{Data}$ is obtained.

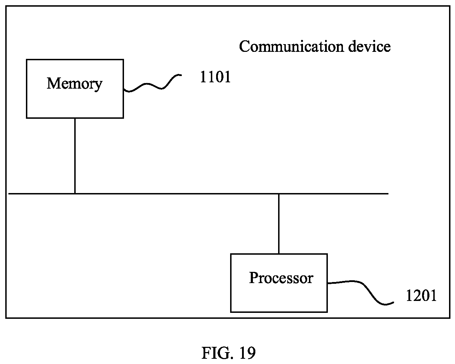

FIG. 19 is a schematic diagram of a communication device provided by an embodiment of the present disclosure. As shown in FIG. 19, the communication device 1000 includes a memory 1100 and a processor 1200. There may be one or more memories 1100 and processors 1200, although one memory 1101 and one processor 1201 are shown as an example in FIG. 19. The memory 1101 and the processor 1201 of the network device may be connected by a bus or in other ways. In FIG. 19, the connection is realized by a bus, for example.

As a computer-readable storage medium, the memory 1101 may be configured to store a software program, a computer-executable program and a module, for example, the program instructions/modules corresponding to the method of any one of the embodiments of the present disclosure. The processor 1201 implements the above method by running the software programs, instructions and modules stored in the memory 1101.

The memory 1101 may mainly include a program storage area and a data storage area, where the program storage area may store an operating system and application program(s) required by at least one feature. In addition, the memory 1101 may include a high-speed random-access memory and a non-volatile memory, for example, at least one magnetic disk storage device, a flash memory device, or another non-volatile solid-state storage device. In some examples, the memory 1101 further includes memories remotely located with respect to the processor 1201, and these remote memories may be connected to the device via a network. Examples of the above-mentioned network include, but are not limited to, the Internet, an intranet, a local area network, a mobile communication network, and a combination thereof.

A further embodiment of the present disclosure provides a computer-readable storage medium storing computer-executable instructions for executing a communication method or a communication environment sensing method as provided in any embodiment of the present disclosure.

A further embodiment of the present disclosure provides a computer program product, including a computer program or computer instructions, where the computer program or the computer instructions are stored in a computer-readable storage medium, a processor of a computer device reads the computer program or the computer instructions from the computer-readable storage medium, and the computer program or the computer instructions, when executed by the processor, cause the computer device to perform the communication method or the communication environment sensing method according to any of the embodiments of the present disclosure.

It can be understood by those of ordinary skill in the art that all or some of the steps of the methods, systems and functional modules/units in the devices disclosed above can be implemented as software, firmware, hardware and appropriate combinations thereof.

In a hardware implementation, the division between functional modules/units mentioned in the above description does not necessarily correspond to the division of physical components; for example, a physical component may have multiple functions, or a function or step may be performed cooperatively by several physical components. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, or a computer. As illustrated by using figures, both a computing device and an application that runs on a computing device may be components. One or more components may reside within a process or a thread of execution, and a component may be located on one computer or distributed between two or more computers. In addition, these components may be executed by various computer-readable media that store various data structures. For example, the components may communicate by using a local or remote process and based on a signal having one or more data packets (for example, data from two components interacting with another component in a local system, a distributed system, or across a network such as Internet interacting with another system by using the signal).

Some embodiments of the present disclosure have been described above with reference to the accompanying drawings and are not to limit the scope of the present disclosure. Any modifications, equivalent substitutions, and improvements made by those of ordinary skill in the art without departing from the scope and essence of the present invention shall fall within the scope of the present disclosure.

**Claims**

1.  A communication method, comprising:

    receiving an orthogonal frequency division multiplexing (OFDM) signal, wherein the OFDM signal comprises at least a received pilot signal and a received data signal;
    performing channel estimation according to the received pilot signal to obtain a channel characteristic;
    obtaining first environment information according to the channel characteristic, wherein the first environment information comprises at least one of: communication environment speed information, communication line-of-sight (LoS) information, communication multipath delay information;
    obtaining interference characteristic data according to the OFDM signal, and obtaining second environment information according to the interference characteristic data, wherein the second environment information comprises at least communication interference information;
    obtaining communication environment sensing information according to the first environment information and the second environment information; and
    matching a receiver according to the communication environment sensing information.

2.  The method of claim 1, wherein the matching a receiver according to the communication environment sensing information comprises:
    obtaining a communication scenario type according to the communication environment sensing information; and
    matching a receiver according to the communication scenario type.

3.  The method of claim 1, further comprising:
    performing signal detection according to the received pilot signal, the received data signal, and a preset local pilot signal to obtain a transmitted signal.

4.  The method of claim 3, wherein the performing signal detection according to the received pilot signal, the received data signal, and a preset local pilot signal to obtain a transmitted signal comprises:

    performing channel estimation according to the received pilot signal and the preset local pilot signal to obtain a channel estimation value; and
    performing channel equalization according to the channel estimation value and the received data signal to obtain the transmitted signal.

**5.** The method of claim 3 or claim 4, further comprising:
performing demodulation according to the transmitted signal to obtain demodulated data.

**6.** The method of claim 3, wherein

the received pilot signal comprises at least a first received pilot symbol;
the received data signal comprises at least a first received data symbol and a second received data symbol; and

the performing signal detection according to the received pilot signal, the received data signal, and a preset local pilot signal to obtain a transmitted signal further comprises:

performing channel estimation according to the first received pilot symbol and the local pilot signal to obtain a first channel estimation value;
performing channel equalization according to the first channel estimation value and the first received data signal to obtain a first transmitted data estimated value;
performing a hard decision according to the first transmitted data estimated value to obtain hard decision data;
performing channel estimation according to the hard decision data and the first received data symbol to obtain a second channel estimation value; and
performing channel equalization according to the second channel estimation value and the second received data symbol to obtain a second transmitted data estimated value.

**7.** The method of claim 6, further comprising:

performing demodulation according to the first transmitted data estimated value to obtain first demodulated data; and
performing demodulation according to the second transmitted data estimated value to obtain second demodulated data.

**8.** The method of any one of claims 1 to 3, wherein the channel characteristic comprises at least one of:
frequency domain fading factor; time correlation factor; energy distribution of time-domain channel estimation values; or Rice factor.

**9.** The method of any one of claims 1 to 4 and claims 6 and 7, wherein

the communication environment speed information comprises at least one of: high speed; medium speed; or low speed;
the communication LoS information comprises at least one of: LoS; or non line of sight (NLoS); and
the communication multipath delay information comprises at least one of: high multipath delay; or low multipath delay.

**10.** The method of claim 1 or 2, the obtaining first environment information according to the channel characteristic comprises at least one of:

comparing the channel characteristic with a preset threshold to obtain the first environment information; or
inputting the channel characteristic into a first neural network to obtain the first environment information.

**11.** The method of any one of claims 1 to 3, wherein the interference characteristic data comprises at least one of:
noise interference; received signal strength indicator (RSSI); or covariance matrix of a signal.

**12.** The method of claim 11, wherein the noise interference comprises at least one of:
full bandwidth noise interference power; noise interference in a space-frequency domain dimension; or noise interference power of a resource block (RB) granularity.

**13.** The method of any one of claims 1 to 3, wherein the communication interference information comprises at least one of:

presence of interference; no interference; interference intensity information; or interference position information;
wherein the interference intensity comprises at least one of: high interference; intermediate interference; or low interference.

14. The method of any one of claims 1 to 3, wherein the obtaining second environment information according to interference characteristic data corresponding to the OFDM signal comprises at least one of:

comparing the interference characteristic data with a communication interference threshold to obtain the second environment information;
inputting the interference characteristic data into a second neural network to obtain the second environment information; or
according to the interference characteristic data, obtaining the second environment information by a clustering algorithm.

15. The method of any one of claims 1 to 3 and claims 6 and 7, wherein the first environment information further comprises at least one of:
terminal device characteristic information, wherein the terminal device characteristic information is parameter information for characterizing a terminal device characteristic.

16. The method of claim 4, wherein the performing channel estimation according to the received pilot signal and the preset local pilot signal to obtain a channel estimation value comprises:

performing channel estimation according to the received pilot signal and the preset local pilot signal to obtain a first channel estimation value; and
performing time-frequency offset estimation and compensation, channel estimation and noise reduction, and channel interpolation processing on the first channel estimation value to obtain a second channel estimation value.

17. A communication environment sensing method, comprising:

receiving an orthogonal frequency division multiplexing (OFDM) signal, wherein the OFDM signal comprises at least a pilot signal and a data signal;
performing channel estimation according to a pilot symbol carried by the pilot signal to obtain a channel characteristic;
obtaining first environment information according to the channel characteristic, wherein the first environment information comprises at least communication environment speed information, communication line-of-sight (LoS) information, communication multipath delay information, terminal device characteristic information, and user characteristic information;
obtaining interference characteristic data according to the OFDM signal, and obtaining second environment information according to the interference characteristic data, wherein the second environment information comprises at least communication interference information; and
obtaining communication environment sensing information according to the first environment information and the second environment information.

18. The method of claim 17, further comprising:
obtaining a communication scenario type according to the communication environment sensing information, wherein the communication scenario type is comprehensively determined according to at least one of the communication environment speed information, communication LoS information, communication multipath delay information, terminal device characteristic information, or communication interference information.

19. A communication apparatus, comprising:

a receiving unit configured to receive an orthogonal frequency division multiplexing (OFDM) signal, wherein the OFDM signal comprises at least a received pilot signal and a received data signal;
a first analysis unit configured to perform channel estimation according to the received pilot signal to obtain a channel characteristic, and obtain first environment information according to the channel characteristic, wherein the first environment information comprises at least one of: communication environment speed information, communication line-of-sight (LoS) information, communication multipath delay information;
a second analysis unit configured to obtain interference characteristic data according to the OFDM signal, and obtain second environment information according to the interference characteristic data, wherein the second environment information comprises at least communication interference information; and
a processing unit configured to obtain communication environment sensing information according to the first environment information and the second environment information.

20. The communication apparatus of claim 19, further comprising:
a matching unit configured to match a receiver according to the communication environment sensing information.

21. A communication device, comprising:
a memory configured to store a computer program; and
a processor configured to run the computer program to perform the communication method of any one of claims 1 to 16, or the communication environment sensing method of claims 17 and 18.

22. A computer-readable storage medium storing computer-executable instructions, wherein the computer-executable instructions are configured to cause a computer to perform the communication method of any one of claims 1 to 16, or the communication environment sensing method of claims 17 and 18.

23. A computer program product, comprising a computer program or computer instructions, wherein the computer program or the computer instructions are stored in a computer-readable storage medium, from which a processor of a computer device reads the computer program or the computer instructions, and the computer program or the computer instructions, when executed by the processor, cause the computer device to perform the communication method of any one of claims 1 to 16, or the communication environment sensing method of claims 17 and 18.

| CP removal and FFT | → | Symbol-level processing module | → | Demodulation and decoding module |

FIG. 1

S100

Receive an OFDM signal

S200

Perform channel estimation according to a received pilot signal in OFDM to obtain a channel characteristic

S300

Obtain first environment information according to the channel characteristic

S400

Obtain interference characteristic data according to the OFDM signal, and obtain second environment information according to the interference characteristic data

S500

Obtain communication environment sensing information according to the first environment information and the second environment information

FIG. 2

Receive an OFDM signal — S100

Perform channel estimation according to a received pilot signal in OFDM to obtain a channel characteristic — S200

Obtain first environment information according to the channel characteristic — S300

Obtain interference characteristic data according to the OFDM signal, and obtain second environment information according to the interference characteristic data — S400

Obtain communication environment sensing information according to the first environment information and the second environment information — S500

Match a receiver according to the communication environment sensing information — S600

FIG. 3

S100

Receive an OFDM signal

S200

Perform channel estimation according to a received pilot signal in OFDM to obtain a channel characteristic

S300

Obtain first environment information according to the channel characteristic

S400

Obtain interference characteristic data according to the OFDM signal, and obtain second environment information according to the interference characteristic data

S500

Obtain communication environment sensing information according to the first environment information and the second environment information

S600

Match a receiver according to the communication environment sensing information

S700

Perform signal detection according to the received pilot signal, a received data signal, and a preset local pilot signal to obtain a transmitted signal

FIG. 4

S100

Receive an OFDM signal

S200

Perform channel estimation according to a received pilot signal in OFDM to obtain a channel characteristic

S300

Obtain first environment information according to the channel characteristic

S400

Obtain interference characteristic data according to the OFDM signal, and obtain second environment information according to the interference characteristic data

S500

Obtain communication environment sensing information according to the first environment information and the second environment information

S600

Match a receiver according to the communication environment sensing information

S700

Perform signal detection according to the received pilot signal, a received data signal, and a preset local pilot signal to obtain a transmitted signal

S800

Perform demodulation according to the transmitted signal to obtain demodulated data

FIG. 5

S610

Obtain a communication
scenario type according to
communication environment
sensing information

S620

Match a receiver according
to the communication
scenario type

FIG. 6

S710

Perform channel estimation
according to a received pilot
signal and a preset local
pilot signal to obtain a
channel estimation value

S720

Perform channel
equalization according to the
channel estimation value and
a received data signal to
obtain a transmitted signal

FIG. 7

S711

Perform channel estimation
according to a received pilot
signal and a preset local
pilot signal to obtain a first
channel estimation value

S712

Perform time-frequency
offset estimation and
compensation, channel
estimation and noise
reduction, and channel
interpolation processing on
the first channel estimation
value to obtain a second
channel estimation value

FIG. 8

Perform demodulation
according to a first
transmitted data estimated
value to obtain first
demodulated data

S810

Perform demodulation
according to a second
transmitted data estimated
value to obtain second
demodulated data

S820

FIG. 9

Communication apparatus

First analysis unit

Second analysis unit

Processing unit

FIG. 10

Communication apparatus

First analysis unit

Second analysis unit

Processing unit

Matching unit

FIG. 11

Adaptive symbol-level receiver

$Y_{Pliot}$

$X_{Pliot}$

$Y_{Data}$

Channel scenario identification result and interference identification result

Receiver of interference-free channel scenario 1

Receiver of interference-free channel scenario 2

Receiver of interference-free channel scenario N

Receiver of interference-present channel scenario 1

Receiver of interference-present channel scenario 2

Receiver of interference-present channel scenario N

$\hat{X}_{Data}$

FIG. 12

Conventional receiver processing

$X_{Pilot}$

$Y_{Pilot}$

$Y_{data}$

LS channel estimation

Time-frequency offset estimation and compensation

Channel estimation and noise reduction

Channel interpolation

Channel equalization

Time-frequency offset compensation

$\hat{X}_{Data}$

FIG. 13

Intelligent adaptive receiver

Scenario-adaptive OFDM signal detector

Neural-network signal detector of interference-free channel scenario 1

Neural-network signal detector of interference-free channel scenario 1

$Y_{Pliot}$

LS channel estimation

$\hat{H}_{LS}$

Neural-network signal detector of interference-free channel scenario N

$X_{Pliot}$

Neural-network signal detector of interference-present channel scenario 1

$Y_{Data}$

Neural-network signal detector of interference-present channel scenario 2

Channel scenario identification result and interference identification result

Neural-network signal detector of interference-present channel scenario N

$\hat{X}_{Data}$

FIG. 14

FIG. 15

FIG. 16

FIG. 17

$\hat{H}_{LS}$

$Y_{data}$

Conventional receiver of scenario n

Time offset estimation and compensation

Channel estimation and noise reduction

Channel equalization

Time offset compensation

Frequency offset estimation and compensation

$\hat{X}_{Data}$

FIG. 18

31

FIG. 19

## INTERNATIONAL SEARCH REPORT

International application No.

**PCT/CN2023/109879**

### A. CLASSIFICATION OF SUBJECT MATTER

H04L 25/02(2006.01)i; H04L 27/26(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXTC, WPABSC, VEN, WPABS, ENTXT, CNKI: 参考信息, 导频, 第一, 调整, 干扰, 感知, 环境, 环境感知, 接收, 解调, 解码, 匹配, 时延, 视距, 速度, 信道估计, 信道均衡, 延时, 硬判, 噪声, 自适应, OFDM, pilot, RS, receiv+, demodulat+, interfer+, noise, adjust+, match+, environment+, awar+

### C. DOCUMENTS CONSIDERED TO BE RELEVANT

| Category* | Citation of document, with indication, where appropriate, of the relevant passages | Relevant to claim No. |
|---|---|---|
| X | CN 114567526 A (HUCHO-TAIMEN SCIENCE AND TECHNOLOGY (BEIJING) CO., LTD.) 31 May 2022 (2022-05-31)<br>description, paragraphs [0030]-[0141] | 1-5, 8-23 |
| A | CN 114567526 A (HUCHO-TAIMEN SCIENCE AND TECHNOLOGY (BEIJING) CO., LTD.) 31 May 2022 (2022-05-31)<br>entire document | 6-7 |
| A | CN 109981516 A (NATIONAL UNIVERSITY OF DEFENSE TECHNOLOGY OF PLA) 05 July 2019 (2019-07-05)<br>entire document | 1-23 |
| A | CN 111432341 A (DALIAN UNIVERSITY OF TECHNOLOGY) 17 July 2020 (2020-07-17)<br>entire document | 1-23 |
| A | US 2008159458 A1 (CHENG YONG-HUA et al.) 03 July 2008 (2008-07-03)<br>entire document | 1-23 |

☐ Further documents are listed in the continuation of Box C.     ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 October 2023** | **09 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/109879**

| Patent document cited in search report | | | Publication date (day/month/year) | Patent family member(s) | | | Publication date (day/month/year) |
|---|---|---|---|---|---|---|---|
| CN | 114567526 | A | 31 May 2022 | None | | | |
| CN | 109981516 | A | 05 July 2019 | None | | | |
| CN | 111432341 | A | 17 July 2020 | None | | | |
| US | 2008159458 | A1 | 03 July 2008 | TW | 200828862 | A | 01 July 2008 |
| | | | | TWI | 323580 | B | 11 April 2010 |
| | | | | US | 7764753 | B2 | 27 July 2010 |

Form PCT/ISA/210 (patent family annex) (July 2022)

**REFERENCES CITED IN THE DESCRIPTION**

**Patent documents cited in the description**

- CN 202210982215